# EUROPÄISCHE PATENTSCHRIFT

(11) **EP 4 163 025 B1**
(45) Veröffentlichungstag und Bekanntmachung des Hinweises auf die Patenterteilung: **06.11.2024**
(21) Anmeldenummer: 21306396.9
(22) Anmeldetag: 05.10.2021
(51) Int. Cl.: B09B 3/35, B02C 19/00, B02C 23/02, B03B 9/06, B09B 5/00, B29B 17/02, B65G 65/30, B09B 101/15, B09B 101/17

(54) **VORRICHTUNG UND VERFAHREN ZUM AUFSCHLIESSEN VON VERBUNDWERKSTOFFEN UND DEREN GEMISCHEN IN EINZELNE WERKSTOFFKOMPONENTEN**
DEVICE AND METHOD FOR BREAKING UP COMPOSITE MATERIALS AND MIXTURES THEREOF INTO INDIVIDUAL MATERIAL COMPONENTS
DISPOSITIF ET PROCÉDÉ DE DÉCOMPOSITION DE MATIÈRES COMPOSITES ET DE LEURS MÉLANGES EN COMPOSANTS DE MATIÈRES SÉPARÉS

(43) Veröffentlichungstag der Anmeldung: 12.04.2023
(73) Patentinhaber: Composites Recycling Solutions, 75001 Paris (FR)
(72) Erfinder: MUTHER, Christoph, 6052 HERGISWIL (CH); LOUVERT, Eric, 1260 NYON (CH)
(74) Vertreter: Casalonga

(56) Entgegenhaltungen:
- WO-A1-2017/036534
- US-A- 5 938 128
- US-A1- 2013 270 372

## Beschreibung

Die vorliegende Erfindung betrifft sowohl eine Vorrichtung als auch ein Verfahren zum Aufschliessen von Verbundwerkstoffen und Gemischen in einzelne Werkstoffkomponenten. Insbesondere betrifft die vorliegende Erfindung eine Vorrichtung, wie sie z.B. aus WO2017/036 534 A1 bekannt ist. Dies entspricht einer Vorrichtung zum Aufschliessen eines zuzuführenden Materialstroms aus Verbundwerkstoffen und formschlüssigen Strukturen, welche Verbundwerkstoffe enthalten, sowie deren Gemenge, in einzelne Fraktionen der Verbundwerkstoffe.

Dabei dienen solche Vorrichtungen und Verfahren dem Aufschliessen von Verbundwerkstoffen sowie formschlüssigen Strukturen, welche Verbundwerkstoffe beinhalten, sowie deren Gemischen, mittels tribomechanischer und mechanochemischer Behandlung, wobei im Innere eines Reaktors eine aufschliessend wirkende Umformung eines aus den Verbundwerkstoffen bestehenden Materialstroms selektiv unter Ausnutzung physikalischer Unterschiede zwischen einzelnen Partikeln im Materialstrom erfolgt. Dabei erfolgt der Aufschluss durch Schubkräfte zwischen den Schichtungen, entlang der Phasengrenzen aufeinandertreffender Regionen unterschiedlicher Verbundwerkstoffe.

Viele Werkstoffe können auf Grund der Komplexität ihres Aufbaus nur bedingt werkstofflich recycelt werden. Insbesondere Verbundwerkstoffe und Gemische derselben stellen hier eine Herausforderung dar. Da diese aus unserem täglichen Leben kaum mehr wegzudenken sind, besteht ein Bedürfnis, Lösungen zur werkstofflichen Verwertung von Verbundwerkstoffen und Werkstoffgemischen anzubieten.

Die Tatsache, dass täglich neue Materialien bzw. Werkstoffe zu den bereits bekannten Werkstoffen hinzukommen, macht es notwendig, beständig neue Lösungen zur wertstofflichen Verwertung von Werkstoffen zu entwickeln, welche einerseits die Auftrennung der einzelnen Werkstoffe ermöglichen und andererseits dabei die Entstehung umweltbelastender Abfälle oder Gase (CO₂, NO_{X},..) vermeiden.

Diese Verbundwerkstoffe sind teilweise mit anderen Verbundwerkstoffen formschlüssig verbunden und deshalb schwer zu trennen.

Zudem verhindern solche komplexen Materialkompositionen vielfach den Einsatz von gängigen Methoden wie einer thermischen Beaufschlagung oder einer Behandlung durch flüssige Chemikalien.

Insbesondere Elektronikschrott stellt einen solchen sehr komplexen Typ von Abfällen dar, bei dem ein Aufschliessen der einzelnen Komponenten des Verbundwerkstoffes schwierig ist.

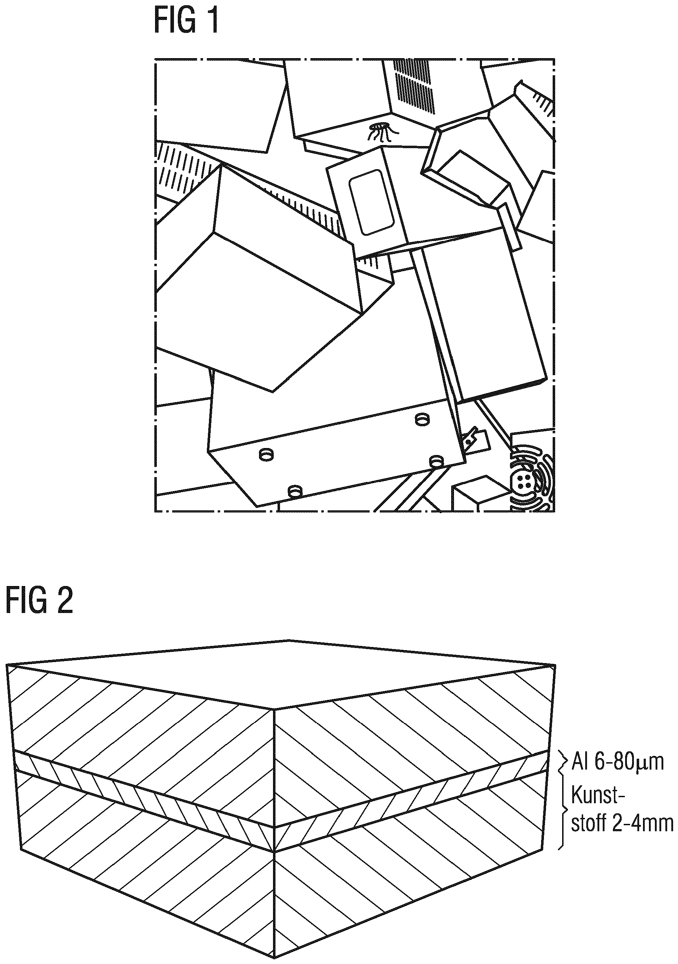

Neben Leiterplatten, die aus Verbundwerkstoffen bestehen, umfasst Elektronikschrott wie er z.B. in **Fig. 1** gezeigt ist, auch eine Vielzahl formschlüssiger Komponenten, wie z.B. Gehäuse, Stecker usw.

Weitere typische Abfälle, die einem Werkstoffrecycling nur schwer zugänglich sind, sind Verpackungsverbunde aus PE und Aluminium als dreischichtigem Laminat, wie in Fig. 2 schematisch gezeigt. Dabei dient das Aluminium als Sperrschicht gegen Licht und wird zum Schutz eines in diesem Laminat eingepackten Produkts gegen Diffusion eingesetzt. Meist befindet sich hierbei die Aluminiumschicht zwischen zwei Schichten Kunststoff, bzw. ist beidseitig laminiert. Die Aluminiumschicht beträgt je nach Anwendung zwischen 6 und 80 µm.

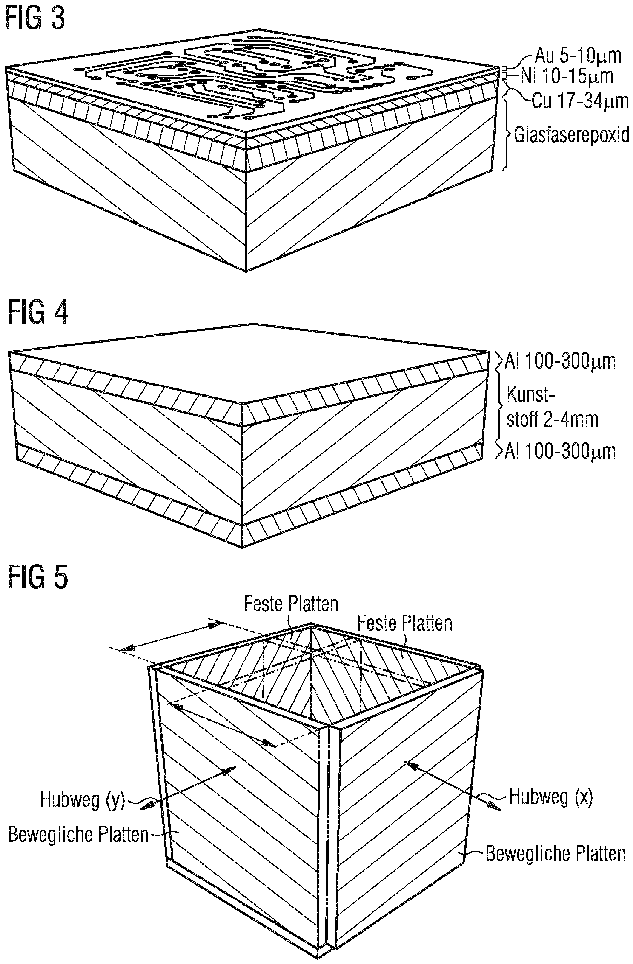

Als weiteres Bespiel bekannter Verbundwerkstoffe zeigt **Fig. 3** schematisch eine gedruckte Schaltung auf einer Leiterplatte. Solche Leiterplatten bestehen aus bis zu über 50 Lagen Kupfer und Glasfaserepoxidharzen (FR4), die als elektrischer Leiter (Kupfer) oder als Isolator (Glasfaserepoxid), dienen. Diese Schichten aus Kupfer sind zwischen 17 und 34 µm dick. Die Dicke der Glasfaser-Epoxidharzschicht ist > 50 µm.

Zudem können die Kontaktstellen mit Edelmetallen, insbesondere Gold, versehen sein. Die Schichtdicken betragen jedoch nur einige wenige µm.

Fig. 4 zeigt eine Sandwichplatte, wie sie als Verkleidung unter anderem im Fassadenbau oder im Fahrzeugbau eingesetzt wird. Das Material ist beständig und leicht. Die Schichtdicken des Metalls, z.B. Aluminium, welches sich auf den Aussenseiten befindet, beträgt zwischen 100 - 300 µm, die des aus Kunststoff bestehenden Kernmaterials ca. 2 - 4 mm.

Probleme bieten solche Verbundwerkstoffe nach der Verwendung dann, wenn diese Materialien aus dem Gebrauch genommen werden und folglich als Abfälle enden. Es ist hinlänglich bekannt, dass bereits in der Produktion dieser Verbundwerkstoffe erhebliche Mengen an Abfällen entstehen können.

So entstehen bei der Herstellung von gedruckten Schaltungen im Laufe des Herstellungsprozesses bis zu 20 % Produktionsabfälle.

Bei der Herstellung von Verpackungsverbunden, wie Tubenlaminaten, entstehen sogar bis zu 30 % Produktionsabfälle.

Aus der Literatur geht hervor, dass bezogen auf die verwendete Menge an Metallen, beispielsweise Aluminium, nur rund ein Drittel überhaupt den Weg zurück in den Wirtschaftskreislauf findet. Bei den teureren Metallen wie Kupfer sind es rund 50 %. Dies ergibt sich aus der Tatsache, dass zum einen die Sammellogistik, und andererseits die Methoden für die Trennung der einzelnen Stoffe aus den Verbundwerkstoffen fehlen, bzw. zu teuer sind.

Die Komplexität dieser Materialien lässt meist ein werkstoffliches Recycling zu den Ausgangsrohstoffen zurück nicht zu, weshalb diese potenziellen Rohstoffquellen den Wirtschaftskreisläufen entzogen werden. Die damit verbundenen Kosten für die Umwelt sind im doppelten Masse problematisch. Es entstehen bei der Neuproduktion einerseits weitere Umweltbelastungen durch Verhüttung von Erzen, sowie andererseits durch die Verbringung der Abfälle, die nicht als Rohstoffe genützt werden können.

Des Weiteren erfordert es enorme Mengen an Energie für die Primärgewinnung von Rohstoffen, insbesondere der Metalle, welche bei einer konsequenten Kreislaufwirtschaft hätten eingespart werden können.

Studien haben gezeigt, dass alleine durch eine konsequente Kreislaufwirtschaft ca. 20% der weltweit produzierten Energie eingespart werden könnte.

Die Materialien, welche zur Zeit mittels ineffizienten thermischen oder nasschemischen Prozessen verarbeitet werden, sind meist minderer Qualität und verursachen erhebliche Umweltbelastungen durch belastende Rückstände und einen verhältnismässig hohen Ausstoss an umweltbelastenden Gasen, Schlämmen, Abwässern und Schlacken.

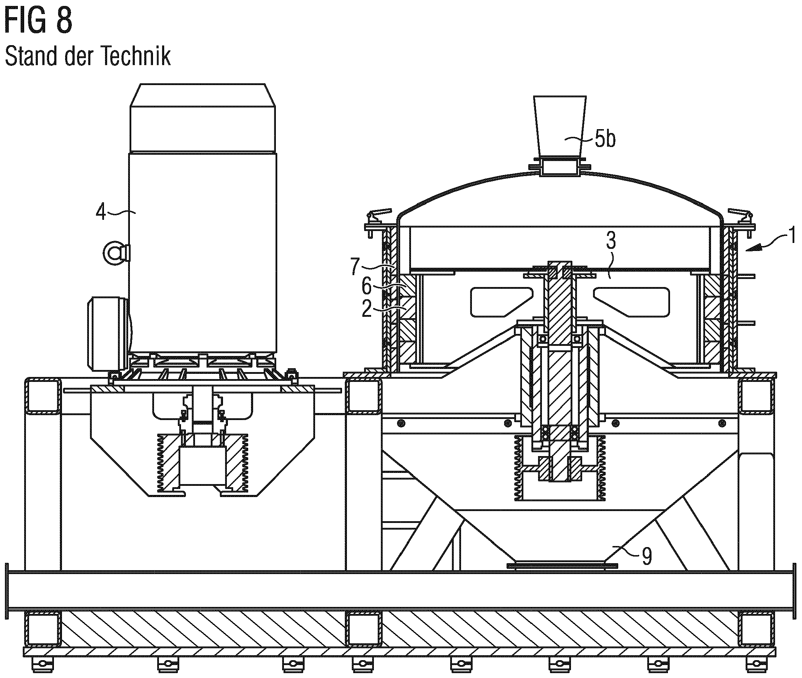

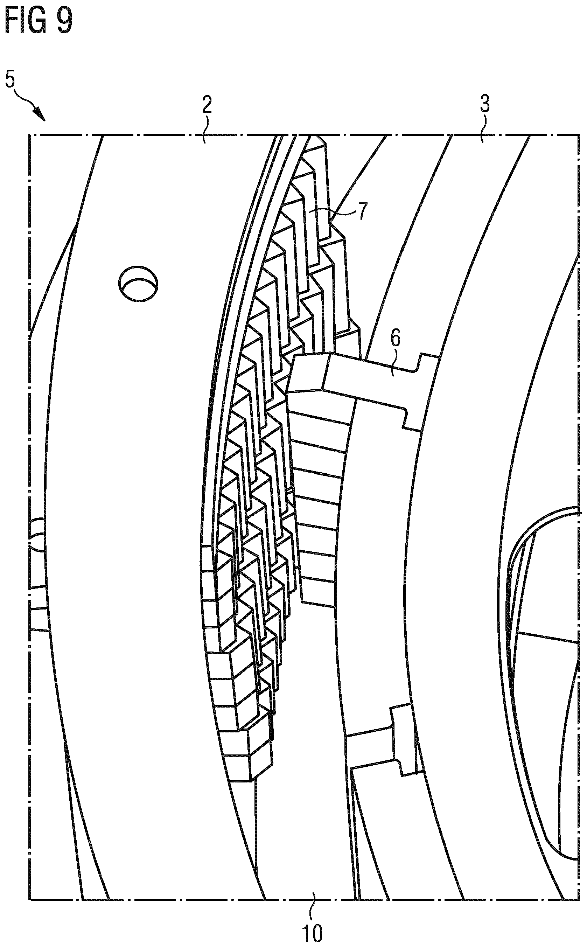

Bei der in der WO 2017/036 534 A1 beschriebenen und in **Fig. 8** gezeigten Vorrichtung (Reaktor 1) hat sich gezeigt, dass sie wenig effizient und unter erheblichem Verschleiss eine unzureichende Wirkung erzielt. Dies hängt in erster Linie mit der schlechten Zuführung des aufzuschliessenden Materials in einen Ringraum **10 (****Fig. 9****)** im Reaktorinneren und der nicht vorhandenen Vorkonditionierung des zu behandelnden Materials zusammen. Das aufzuschliessende Gemenge fällt bei dieser bekannten Vorrichtung direkt durch einen trichterförmigen Materialeinlass (Schütttrichter) auf einen drehbaren Rotor **3** und wird oberhalb des Ringraums **10** an das Gehäuse eines ortsfest verbauten Stators **2** geschleudert. Erst danach kommt das aufzuschliessende Material in den mechanischen Eingriffsbereich zwischen den Rotorwerkzeugen **6** und den Statorwerkzeugen **7,** wobei die Zufuhr in den Ringraum **10** unkontrolliert und chaotisch erfolgt. Bei einsetzendem Verschleiss am Rotor **3** und am Stator **2,** und insbesondere an den Rotorwerkzeugen **6** und Statorwerkzeugen **7,** können zudem die für den Aufschluss notwendigen Bedingungen im Reaktor **1** nicht kontinuierlich aufrecht erhalten werden, da kein dem jeweils aktuellen Verschleisszustand angepasstes Fluid zugeführt wird. Die dem Reaktor **1** im Stand der Technik zugeführte Umgebungsluft ist ein Zufallsresultat, welches die zu diesem Zeitpunkt bestehenden Bedingungen in der Maschinenhalle widerspiegelt, in der der in **Fig. 8** gezeigte Reaktor **1** aufgestellt und im Einsatz ist.

Ziel der vorliegenden Erfindung ist es deshalb, die aus dem Stand der Technik bekannte Vorrichtung dahingehend zu verbessern, dass eine effizientere und umweltschonendere Trennung von Verbundwerkstoffen und Stoffgemischen ermöglicht wird, wobei die Standzeit einer solchen Vorrichtung erhöht wird und Maßnahmen bereitgestellt werden, mit denen über die gesamte Lebensdauer einer solchen Vorrichtung trotz laufzeitbedingtem Verschleiss ein möglichst gleichmäßiges und zuverlässiges Aufschliessen der in einer solchen Vorrichtung zu trennenden Verbundwerkstoffe zu erzielen ist, und zwar für eine möglichst große Bandbreite unterschiedlich zusammengesetzter Verbundwerkstoffe.

Erfindungsgemäss wird diese Aufgabe durch eine Vorrichtung nach Anspruch 1 und ein Verfahren nach Anspruch 11 gelöst. Die weiteren Ansprüche betreffen vorteilhafte Ausführungsformen solcher Vorrichtungen und Verfahren.

Vorteile und Merkmale der vorliegenden Erfindung ergeben sich insbesondere aus der nachfolgenden detaillierten Beschreibung von bevorzugten Ausführungsformen in Verbindung mit den beigefügten Figuren.

Es zeigen:
**Fig. 1** eine schematische Darstellung von Elektronikschrott;
**Fig. 2** einen aus dem Stand der Technik bekannten Verpackungsverbund;
**Fig. 3** einen aus dem Stand der Technik bekannten Laminatverbundwerkstoff, der metallische Schichten und eine Glasfaserepoxid-Schicht aufweist;
**Fig. 4** einen weiteren aus dem Stand der Technik bekannten Laminatverbundwerkstoff, wie er z. B. im Fassadenbau oder Fahrzeugbau eingesetzt wird;
**Fig. 5** einen zweiachsigen Plattenbrecher, wie er in einer bevorzugten Ausführungsform einer erfindungsgemässen Vorrichtung zum Aufschliessen von Verbundwerkstoffen vor deren Zufuhr in Innere des Reaktors einer erfindungsgemässen Vorrichtung zum Einsatz kommen kann;
**Fig. 6** eine schematisches Diagramm der verschiedenen Schritte einer bevorzugten Ausführungsform eines erfindungsgemässen Verfahrens zum Aufschliessen von Verbundwerkstoffen in einer in **Fig. 7** gezeigten erfindungsgemäßen Vorrichtung;
**Fig. 7** eine Ausführungsform einer erfindungsgemässen Vorrichtung (Reaktor), welche mit einem Gemisch aus Gas, Flüssigkeit und den zu behandelnden Verbundmaterialien kontinuierlich befüllt werden kann, um eine kontinuierliche Durchführung eines erfindungsgemässen Verfahrens zu ermöglichen;
**Fig. 8** eine aus WO2017/036 534 A1 bekannte Vorrichtung (Reaktor) zum Aufschliessen von Verbundwerkstoffen, und
**Fig. 9** eine Detailansicht eines Ringraums im Inneren eines in **Fig. 7** **oder** **8** gezeigten Reaktors, wobei der Ringraum zwischen einem Rotor und einem Stator dort gebildet ist, wo Rotor- und Statorwerkzeuge miteinander auf Verbundwerkstoffkomponenten in einem dem Reaktor zuzuführenden Materialstrom einwirken können.

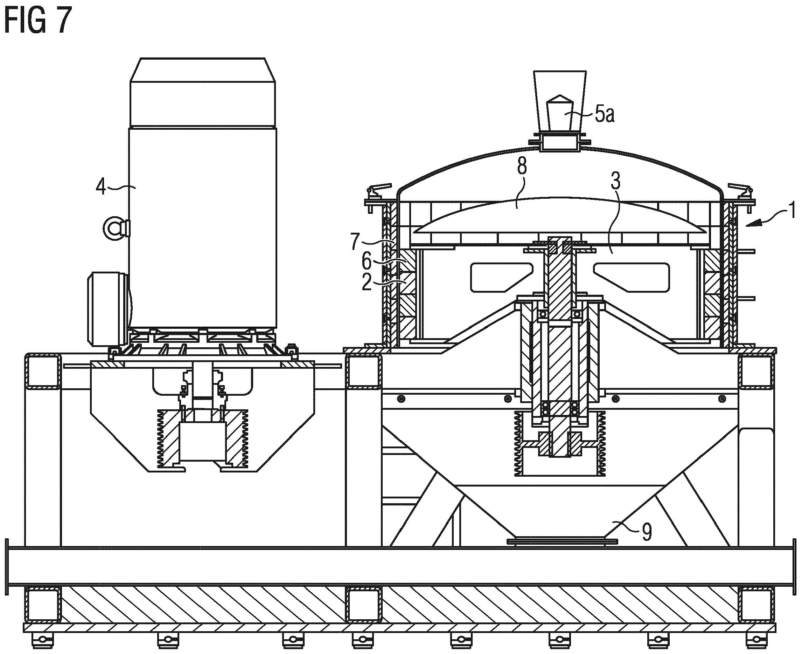

Eine bevorzugte Ausführungsform einer erfindungsgemässen Vorrichtung (Reaktor **1)** zum Trennen von Verbundwerkstoffen und Gemischen ist in **Fig. 7** gezeigt.

Wie bei der in **Fig. 8** gezeigten bekannten Vorrichtung umfasst die in **Fig. 7** gezeigte bevorzugte Ausführungsform einer erfindungsgemäßen Vorrichtung (Reaktor **1)** eine Antriebseinheit **4** zum Antreiben eines Rotors **3,** welcher mit einer Lager-/Welleneinheit verbunden ist, die bevorzugter Weise eine im Wesentlichen parallel zur Erdanziehungskraft ausgerichtete Drehachse aufweist.

Dabei weist bei dem in **Fig. 7** bzw. **8** gezeigten Reaktor **1** der Rotor **3** mindestens ein Rotorwerkzeug **6 (****Fig. 9****)** auf. Der drehbare Rotor 3 ist von einem ortsfest eingebauten Stator **2** umgeben, der seinerseits in einen Ringraum **10 (****Fig. 9****)** weisende Statorwerkzeuge **7 (****Fig. 9****)** aufweist. In einer alternativen Ausführungsform (nicht gezeigt) kann aber auch ein Rotor einen Stator umschließen.

Der Rotor **3** und der Stator **2** sind bevorzugter Weise im Wesentlichen zylindrisch im Inneren des Reaktors **1** ausgebildet. Je nach Art und Zusammensetzung des aufzuschließenden Materialstroms können aber auch andere als zylindrische Formen für den Rotor **3** und den Stator **2** zum Einsatz kommen.

Bei der in **Fig. 8** gezeigten bekannten Vorrichtung (Reaktor **1)** umfasst diese einen Materialeinlass in Form eines einfachen Schüttrichters **5b,** durch den der dem Reaktor **1** zuzuführende Materialstrom in das Innere des Reaktors **1** fällt. Beim Zuführen des zu trennenden Materials von oberhalb des Rotors **3** und des Stators **2** gelangt dieses bei der in **Fig. 8** gezeigten bekannten Vorrichtung unkontrolliert in den Ringbereich **10 (****Fig. 9****),** wo es zwischen Rotorwerkzeugen **6** und Statorwerkzeugen **7** zerkleinert wird und von wo es dann zu einem Materialauslass **9** unterhalb des Rotors **3** und des Stators **2** gelangt.

Im Gegensatz dazu ist bei der in **Fig. 7** gezeigten erfindungsgemässen Vorrichtung der Materialeinlass in Form eines Injektor-Mischers **5a** ausgeführt. Dieser ermöglicht eine dosierte Zufuhr von vorbehandeltem Material im zuzuführenden Materialstrom, insbesondere Bruchmaterial, in das Innere des Innere des Reaktors **1.** Weiterhin ermöglicht der Injektor-Mischer **5a** eine variable Zudosierung eines Arbeitsfluids, welches dem aufzuschließenden Materialstrom im Injektor-Mischer **5a** unter sich im Laufe der Zeit änderbaren Bedingungen zugemischt werden kann.

Weiterhin ist bei der erfindungsgemässen Vorrichtung eine gewölbte Scheibe **8** zwischen dem Injektor-Mischer **5a** einerseits und dem Rotor **3** und Stator **2** andererseits im Inneren des Reaktors **1** angebracht, um einem dem Injektor-Mischer **5a** zuzuführenden Strom an aufzuschliessendem Verbundwerkstoffmaterial gezielt in den Eingriffsbereich im Ringraum **10 (****Fig. 9****)** zwischen den Rotorwerkzeugen **6** und den Statorwerkzeugen **7** abzulenken.

Die Scheibe **8** ist zu einem von oben in das Innere des Reaktors **1** durch den Injektor-Mischer **5a** hinzugeführten Materialstrom konkav weggewölbt. Dadurch kann sichergestellt werden, dass Bruchstücke des durch den Injektor-Mischers **5a** in das Inneren des Reaktors **1** zugeführten und dort weiter aufzuschliessenden Materialstroms auf der Oberfläche der gewölbten Scheibe **8** zielgerichtet in den ringförmigen Eingriffsbereich (Ringbereich **10)** zwischen den Rotorwerkzeugen **6** und den Statorwerkzeugen **7** gelenkt werden. Die gewölbte Scheibe **8** ermöglicht also eine zielgerichtete Ausrichtung des aufzuschliessenden Materialstroms im Inneren des Reaktors **1** auf den Bereich, wo die Rotorwerkzeuge **6** und die Statorwerkzeugen **7** ihre gewünschte mechanische Zerkleinerungsarbeit an den von aussen zugeführten Bruchstücken im aufzuschließenden Materialstrom direkt und ohne Umwege entfalten können. Dadurch wird die Effizienz, mit der der zugeführte Materialstrom aufgeschlossen wird, erhöht. Weiterhin wird ein unnötiger Verschleiss an Teilen im Innenraum des Reaktors **1,** die beim Stand der Technik einem chaotischen Materialzustrom ausgesetzt sind, verhindert.

Bei einer besonders bevorzugten Ausführungsform der erfindungsgemässen Vorrichtung ist zudem zur weiteren Feinabstimmung vorgesehen, dass die gewölbte Scheibe **8** im Inneren des Reaktors **1** in Richtung der Drehachse des Rotors **3** verstellbar ist. Dadurch kann der Abstand der gewölbten Scheibe **8** sowohl zum Injektor-Mischer **5a** als auch zum Rotor **3** und Stator **2** in vertikaler Richtung optimal angepasst werden. Dadurch kann die gezielte Ablenkung des durch den Injektor-Mischer **5a** in das Innere des Reaktors **1** eingeführten Materialstroms in den Eingriffsbereich zwischen den Rotorwerkzeugen **6** und den Statorwerkzeugen **7** weiter optimiert werden. Eine solche Verstellung des Abstands zwischen der gewölbten Scheibe **8** und dem Injektor-Mischer **5a** bzw. dem Rotor **3** und dem Stator **2** kann aber auch als Antwort auf ein sich eventuell über den Lauf der Zeit ergebendes Abstumpfen der Rotorwerkzeuge **6** und Statorwerkzeuge **7** durchgeführt werden.

Dadurch werden die bei der aus dem Stand der Technik bekannten Vorrichtung auftretenden Nachteile hinsichtlich des Verschleisses von Rotor- und Statorwerkzeugen **6, 7** und unzureichendem Wirkungsgrad beim weiteren Aufschliessen der Bruchstücke im Inneren des Reaktors **1** überwunden. Im Injektor-Mischer **5a** kann bei der in **Fig. 7** gezeigten erfindungsgemäßen Vorrichtung (Reaktor **1)** ein Gas-Flüssigkeitsgemisch (Fluid) auf den zuzuführenden und aufzuschliessenden Materialstrom appliziert werden, mit welchem sich das Fluid intensiv vermischt.In einer weiteren besonders bevorzugten Ausführungsform der erfindungsgemässen Vorrichtung, die insbesondere bei einer Vorzerkleinerung von Elektroschrott wie er in **Fig. 1** gezeigt ist, zum Einsatz kommt, erfolgt eine Vorzerkleinerung des anschliessend dem Injektor-Mischer **5a** zuzuführenden Materialstroms aus Bruchmaterial aus Verbundwerkstoffen (insbesondere Elektronikschrottkomponenten) mittels eines neuartigen zwei- oder dreiachsigen Plattenbrechers, wie er in **Fig 5** gezeigt ist. Im Gegensatz zu den konventionellen Plattenbrechern arbeitet diese neue Plattenbrecher in zwei oder drei Richtungen (Achsen).

Bei dem in **Fig. 5** gezeigten Ausführungsbeispiel ist ein zweiachsiger Plattenbrecher gezeigt. Ein solcher neuartiger Plattenbrecher bewirkt durch wechselseitigen Druck auf das zu aufzuschliessende Material aus im Wesentlichen senkrecht zueinander stehenden Richtungen, dass dieses in einzelne Bauteile zerfällt und die formschlüssigen Strukturen im Materialstrom aufgehoben werden. Dies lässt eine Selektion bestimmter Einzelkomponenten vor dem eigentlichen Einführen des Materialstroms in Innere des Reaktors **1** der erfindungsgemässen Vorrichtung (Reaktor **1)** zu, und ermöglicht, soweit nötig, eine Vorseparation von anfallenden Bruchkomponenten vor dem Eintritt in Innere des Reaktors **1.**

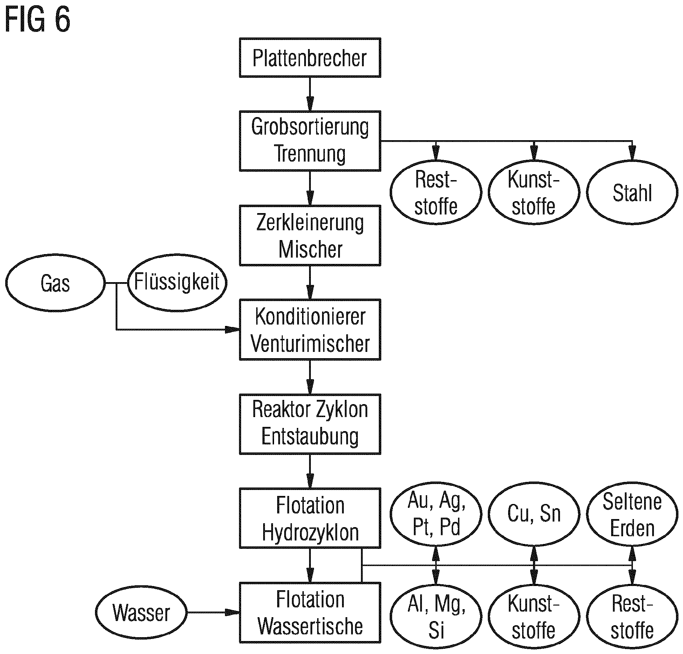

Bei einer weiteren besonders bevorzugten Ausführungsform einer erfindungsgemässen Vorrichtung können weitere Mittel zum Vorsortieren von Bruchstücken aus dem in den Injektor-Mischer **5a** zuzuführenden Materialstrom in Form von insbesondere Aushebemagneten, Induktionsabscheidern und/oder Multisensorseparatoren zwischen den Plattenbrecher und den Injektor-Mischer **5a** geschaltet sind. Diese ermöglichen eine im Blockdiagramm einer Ausführungsform eines erfindungsgemässen Verfahrens in **Fig. 6** gezeigte Grobsortierung/Trennung von insbesondere magnetischen oder magnetisierbaren Komponenten sowie bestimmten Kunststoffkomponenten aus dem zuzuführenden Materialstrom. Die Vorteile einer solcher Vorgehensweise sind naheliegend: so kann mit minimalem Aufwand ein wesentlicher Teil an Material einem dem Reaktor **1** zuzuführenden Materialstrom bereits vor dessen Eintritt in Innere des Reaktors **1** entzogen werden, sodass der Reaktor **1** entlastet wird.

Weiterhin können bei einer weiteren bevorzugten Ausführungsform der vorliegenden Erfindung weitere zum Zerkleinern dienende Mittel zwischen die Aushebemagneten, Induktionsabscheider und/oder Multisensorseparatoren einerseits sowie den Injektor-Mischer **5a** andererseits geschaltet sein. Bei diesen weiteren zum Zerkleinern dienenden Mittel kann es sich insbesondere um Schredder, Hammermühlen und/oder Granulatoren handeln, die dazu ausgelegt sind, weitere Bruchstücke aus dem dem Reaktor **1** zuzuführenden Materialstrom auf eine Grössenordnung von < 15 mm zu zerkleinern und homogen zu vermischen. Diese ermöglichen eine im Blockdiagramm einer Ausführungsform eines erfindungsgemässen Verfahrens in **Fig. 6** gezeigte weitere Zerkleinerung und eine Mischung, der Partikel im Materialstrom, die durch den Injektor-Mischer **5a** in den Reaktor **1** einer erfindungsgemässen Vorrichtung eingeführt werden.

Nach dieser optionalen Vorzerkleinerung und Zwischenseparation in den Schritten "Plattenbrecher", "Grobsortierung" und "Zerkleinerung/Mischer" in **Fig. 6****,** wird der aufzuschliessende Materialstrom dem erfindungsgemässen Reaktor **1 (****Fig. 7****)** unter Beigabe eines Gas-Flüssigkeitsgemisches (Fluids) in dem Injektor-Mischer **5a** zum eigentlichen Aufschliessen in den Reaktor **1** zugeführt.

Liegt der aufzuschliessende Materialstrom aber bereits von Anfang an in einer geeigneten Zusammensetzung vor (z.B. bei weichen Kunststoffverbundfolien, die weder in einem Plattenbrecher gebrochen werden müssen, noch durch Aushebemagneten beeinflussbar sind, noch durch Hammermühlen zerkleinert werden könnten), so kann auf diese optionalen Schritte der Vorzerkleinerung und Zwischenseparation komplett oder zumindest teilweise verzichtet werden. Die optionalen Schritte "Plattenbrecher", "Grobsortierung/Trennung" und "Zerkleinerung/Mischer" in **Fig. 6** werden also in Abhängigkeit von den zu bearbeitenden Ausgangswerkstoffen je nach Bedarf vor einen erfindungsgemäßen Reaktor **1** eingebaut oder weggelassen.

Aus dem Stand der Technik nach WO2017/036 534 A1 ist lediglich bekannt, dass das Material unter Beigabe von Umgebungsluft über einen Schütttrichter **5b (****Fig. 8****)** dem Reaktor **1** zugeführt wird. Ein wesentliche Verbesserung hinsichtlich der Wirkungsweise eines solchen Reaktors **1** beim Aufschliessen von Verbundwerkstoffen lässt sich aber erfindungsgemäss durch eine geeignete Hinzufügung eines Fluids unter spezifisch auf die zu aufzuschliessenden Materialien angepassten Bedingungen erzielen, da so eine gezielte tribomechanische und mechanochemische Einwirkung des Fluids auf die aufzuschliessenden Verbundstoffe erzielt werden kann.

Besonders bevorzugte Prozessparameter für das dabei erfindungsgemäss zum Einsatz kommende Fluid im Mischer-Injektor **5a** sind wie folgt:.

Die Eingangstemperatur der in das Fluid zu mischenden Flüssigkeit beträgt:
- zwischen 5 -25 °C für Wasser,
- für insbesondere bei einer gewünschten chemischen Inertisierung im Innere des Reaktors **1** zum Einsatz kommendem flüssigen Stickstoff zwischen -250 bis -200 °C, und
- für Öl zwischen 10-30 °C

Die Eingangstemperatur der in das Fluid einzumischenden Gase beträgt:
- bei Umgebungsluft zwischen 10-30 °C,
- bei Argon zwischen 5 - 25 °C

Die oben genannten Flüssigkeiten werden unter atmosphärischem Druck und die oben genannten Gase bei 500 - 800 kPa unter Zugabe des Feststoffes des aufzuschliessenden Materialstroms dem Injektor-Mischer **5a** zugeführt. Dabei kann die Dichte des Fluids durch einen erhöhten Flüssigkeits- oder Gasanteil erheblich beeinflusst werden. Die im Prozess durch Friktionen entstehende Wärmeenergie wird, durch den Flüssigkeitsanteil begünstigt, effizient abgeführt. Eine erhöhte Dichte des Fluids führt zu einer längeren Verweilzeit des Feststoffes (aufzuschliessender Verbundwerkstoff im zuzuführenden Materialstrom) im Ringraum **10** im Inneren des Reaktors **1.** Zudem führt ein erhöhter Anteil von Flüssigkeit zum elektrostatischen Potenzialausgleich zwischen den Partikeln im Materialstrom, wodurch eine elektrostatische Aufladung der Partikel verhindert wird.

Dies unterscheidet sich vom Stand der Technik wie in WO 2017/036 534 A1 beschrieben.

Des Weiteren kann nach dem Verlassen des Materials im Hauptstrom aus dem Inneren des Reaktors **1** durch den Materialauslass **9** optional eine weitere Separation der aufgeschlossenen Komponenten auf Wassertrenntischen, Hydrozyklonen und Flotations- bzw. Sedimentationsbecken oder in Filtern erfolgen. Dies ist in **Fig. 6** veranschaulicht. Dabei kann das aus einem optional zugeschalteteten Zyklon bzw. Filter ausgetragene Gemenge in dem aus dem Innere des Reaktors **1** auszutragenden Materialstrom unmittelbar nach dem Verlassen des Innere des Reaktors **1** durch eine optionale Venturidüse mit Wasser benetzt werden. Dies hat den entscheidenden Vorteil, dass jegliche Bildung von Staub verhindert wird und sämtliche, auch feinste Strukturen, wie z. B. Edelmetalle oder Seltenerdmetalle, erfasst werden können.

Um diese Verbundwerkstoffe zu nutzen, bzw. als Rohstoffquelle zu erschliessen, werden diese Verbundwerkstoffe in erfindungsgemäss bevorzugter Weise einem mechanischen Nachbehandlungsprozess unterzogen. Der Sinn der Erfindung ist es, die einzelnen Materialien in einem zuzuführenden Materialstrom mittels der in **Fig. 7** gezeigten Vorrichtung (Reaktor **1)** aufzuschliessen und danach zu separieren. Dies kann bei einer bevorzugten Ausführungsform eines erfindungsgemäßen Verfahrens zum Betreiben erfindungsgemäßen Vorrichtung z.B. in fünf Verfahrensstufen erfolgen, wie sie in **Fig. 6** schematisch veranschaulicht sind:
1.) Aufschluss der Strukturen, z.B. Computergehäuse, erfolgt durch einen Plattenbrecher **(****Fig. 5****),** welcher einen wechselseitigen Druck von zwei (eventuell drei) beweglichen Platten auf die gegenüberliegenden, festen Platten ausübt. Die aufgebrachten Kräfte, welche auf die Computergehäuse wirken, führen dazu, dass die Struktur bzw. der Formschluss zerstört bzw. zerkleinert wird. Die Gehäuse und inneren Strukturen sind nun in einzelne Teile zerborsten und können danach mittels eines Räumers aus dem Innern des Plattenbrechers ausgetragen werden.
2.) Trennung bzw. Grobsortierung der Materialien. Die nun freiliegenden Materialien, wie Kunststoffe, Leiterplatten, Blechteile usw., werden anschließend einer Zwischenseparation unterzogen. Dabei werden mittels eines Aushebemagnetes die Stahlgehäuse, bzw. generell ferromagnetische Anteile im aufzuschliessenden Materialstrom entzogen. Über Induktionsabscheider, bzw. Multisensorseparatoren, erfolgt die Trennung der Kunststoffanteile, sowie Fe-Cu-Komponenten (Transformatoren, Motoren und der Gleichen). Der Rest, welcher aus Verbundstoffen, wie Leiterplatten, Stecker, Kabeln usw. besteht, wird der nächsten Prozessstufe zugeführt.
3.) Der übrig gebliebene Teilstrom wird nun einer klassischen mechanischen Zerkleinerung in Schreddern, Hammermühlen, Granulatoren usw. zugeführt und auf eine Grösse von z.B. <15 mm verarbeitet. Das Material wird homogen gemischt und zur weiteren Verarbeitung bereitgestellt.
4.) Das Material wird nun unter Zugabe eines Fluids (Gas-Flüssigkeitsgemisch) dem Reaktor 1 in der erfindungsgemässen Vorrichtung über den Injektor-Mischer **5a** zudosiert, bevorzugter Weise bei den oben angegebenen Drücken und Temperaturen. Im Reaktor **1** erfolgt der eigentliche Aufschluss der Verbundwerkstoffe in einzelne Materialqualitäten. Diese werden ausgetragen und pneumatisch (d.h. durch eine Absaugung) dem Reaktor **1** entzogen. Der Prozess ist nachstehend näher beschrieben. Anschliessend erfolgt die Trennung des Gemenges und des Fluids in optional hinter den Reaktor **1** in den abzuführenden Materialstrom geschalteten Zyklonen und Filtersystemen. Alternativ kann das Gemenge als Suspension unter Zugabe von weiterer Flüssigkeit in einen optional in den abzuführenden Materialstrom hinter den Reaktor **1** geschalteten Venturimischer (nicht gezeigt) homogenisiert und über Pumpen (nicht gezeigt) der Dichtetrennung direkt zudosiert werden.
5.) Das Gemenge wird dann durch eine Dichtetrennung unter Zugabe weiterer Flüssigkeit getrennt. Dabei können Flotationsbecken, Hydrozyklone und Wassertrenntische eingesetzt werden. In den (üblicherweise mit Wasser) befüllten Flotationsbecken, werden Stoffe mit einer Dichte < 1 g/cm³ als nicht absetzbarer Teil entzogen. Dabei handelt es sich um Thermoplaste und andere organische Substanzen. Die schwereren Kunststoffe mit einer Dichte >1 g/cm³, werden zusammen mit den Mineralstoffen und Metallen als Sediment mittels einer Suspension in den aus dem Reaktor 1 abzuführenden Materialstrom optional geschalteten Wassertrenntischen bzw. Hydrozyklonen zugeführt. Dort kann eine Trennung in Kunststoffe, Aluminium und andere Leichtmetalle, Kupfer und Kupferlegierungen, Edelmetalle und angereicherten Seltenen Erdmetalle erfolgen. Die Separation erfolgt aufgrund des Vorhandenseins unterschiedlicher Dichten der aufzuschliessenden Materialien und der unterschiedlichen Beweglichkeiten der sich ihnen befindlichen Partikel in Fluiden. Dazu erfolgt eines vibratorische Anregung der schrägen Ebene eines Wassertrenntisches, welche das unterschiedliche Förderverhalten der einzelnen Materialien nutzt. Die Partikel der unterschiedlichen Verbundwerkstoffanteile zeigen durch ihre unterschiedlichen Dichten und Partikelgrößen unterschiedliche Beweglichkeiten relativ zueinander in einer Umgebungsflüssigkeit; dies führt bei der vibratorischen Anregung der Wassertrenntische zu einer Trennung der Partikelsorten auf einem Wassertrenntisch. Der Austrag erfolgt dann über wasserführende Rinnen, welche unterschiedlich angeordnet und ausgestaltet sind. Anschliessend wird das Material, falls notwendig, getrocknet. Die vorstehenden Prozessschritte 1) bis 5) beziehen sich bevorzugter Weise auf Materialien, welche Elektro- und Elektronikschrott **(****Fig. 1****)** entstammen.

Materialien, welche nicht formschlüssig vorliegen **(****Fig. 2 - 4****),** benötigen die Prozessschritte 1 und 2 im Allgemeinen nicht. Dementsprechend beginnt in diesem Falle der Prozess bevorzugter Weise erst mit der Zerkleinerung im Prozessschritt 3).

Besteht das zu behandelnde Inputmaterial aus einem Gemenge, welches eine Grösse von < 15 mm aufweist, wird der Prozessschritt 3) ebenso nicht benötigt, da das Material in diesem Falle direkt dem Reaktor zugeführt werden kann.

**Fig. 6** zeigt einen schematischen Überblick über die einzelnen Stationen bzw. Komponenten, die einer erfinderischen Vorrichtung und in einem erfinderischen Verfahren auftreten.

Wie in **Fig. 6** gezeigt, werden, um den Verbundwerkstoff aufzuschliessen, die physikalischen Unterschiede der sich im Verbundwerkstoff befindlichen Materialien (Verbundelemente) genutzt. Diese physikalischen Unterschiede treten naturgemäss an Grenzschichten, also dort wo sich jeweils ein einzelner Werkstoff zu einem benachbarten anderen Werkstoff abgrenzt.

Die Unterschiede zwischen den physikalischen Eigenschaften der einzelnen Werkstoffe wie insbesondere Dichte, Elastizität, Duktilität, Schwingungsabsorption werden unter Beigabe von Additiven insbesondere Wasser und Gas, vorzugsweise auch konditionierte Umgebungsluft unterstützt. Zudem wird unter Ausnützung des Flüssigkeits- bzw. Wasseranteils im Fluid die beim Prozess entstehenden Wärme abgeführt werden. Die mechanische Beaufschlagung des Verbundstoffes führt zur schichtweisen Ablösung (Delamination) der Materialien durch Umformung, welche durch das unterschiedliche Rückstellverhalten der Verbundmaterialien auch unterschiedlich ausfällt. Zudem wirkt das Gas-Flüssigkeitsgemisch (Fluid), welches im Injektor-Mischer 5a der Vorrichtung zugeführt wird, bei den elastischen Anteilen, wie Kunststoffe, Gummi usw. aufschlussfördernd durch eine erhöhte Absorption der entstehenden Schwingungen.

Eine Zerkleinerung oder Pulverisierung wird dabei nicht angestrebt.

Die Unterschiede der Streckgrenzen und der Elastizitäten der Verbundelemente führen letztlich zu einer Aufhebung des Verbundes an den Berührungsflächen.

Dabei erfolgt im Gegensatz zu der WO 2017/036 534 A1**,** die Zufuhr des zu verarbeitenden Materials über einen Injektor-Mischer **5a,** wie z.B. einen Venturimischer, in welchem ein Gas-Flüssigkeitsgemisch mit dem zu verarbeitendem Feststoff (Verbundwerkstoffpartikel im zuzuführenden Materialstrom) vermischt wird. Das Fluid kann je nach Anwendung bevorzugter Weise aus Luft und Wasser bestehen, oder in einer Anwendung bei welcher eine Inertisierung erforderlich ist, können auch Stickstoff oder Argon zugeführt werden. Ebenso hat es sich gezeigt, dass unter Beigabe von festen Hilfsstoffen zur Absorption von Ölen oder Lithium ein Gemisch, z.B. Kalk und Holzmehl, beigegeben werden kann. Dies verhindert zum einen Oxydation, zum anderen ermöglicht es den Austrag des Gemenges in einer festen Form.

Beim Eintreten von Verschleiss am Rotor **3** bzw. Stator **2** im Reaktor **1** werden Anpassungen des Fluids vorgenommen, um die zum Aufschluss notwendigen Parameter aufrecht zu erhalten. Durch den Verschleiss an Rotor **3** und Stator **2,** wird die Durchflussgeschwindigkeit des Materials durch den Ringraum **10** erheblich erhöht und damit die Verweilzeit im Reaktor **1** verkürzt und dadurch wird ein zufriedenstellender Aufschluss des Materials vereitelt. Erhöht man jedoch die Dichte des Fluids, erzielt man eine längere Verweilzeit im Ringraum **10,** wodurch ein ausreichender Aufschluss des Materials wiederum gewährleistet wird.

Es ist daher naheliegend, dass hierdurch die Anlagenverfügbarkeit erheblich verbessert wird.

Durch die kontrollierte Zuführung des Feststoff-Fluidgemisches über die gewölbte, optional in der Senkrechten, verstellbaren Scheibe **8 (****Fig. 7**), wird das Gemenge direkt dem Ringraum **10 (****Fig. 9****)** zugeführt, ohne dass ein Gegenprallen an den Stator **2** vor dem Ringraum **10** erfolgt. Der Eintritt in den Ringraum **10,** wo der Aufschluss des Materials erfolgt, kann somit kontrollierbar unter gleichbleibenden Parametern erfolgen. Zudem wird der Verschleiss, insbesondere vor der Eintrittszone des Materials in den Ringraum **10,** erheblich reduziert. Als weiterer Effekt, ist ein höherer Durchsatz in der Vorrichtung gegeben, da keine Verluste durch eine unkontrollierte Zuführung des Materials mehr erfolgen..

Um diese aufschliessenden Effekte zu erreichen, bedarf es einer Vorrichtung (Reaktor **1),** wie sie in **Fig. 7** gezeigt ist und welche mit einem Gemisch aus Gas, Flüssigkeit und dem zu behandelnden Verbundmaterial kontinuierlich befüllt wird. Dieser zuzuführende Materialstrom wird kurz vor dem Reaktor **1** gemischt bzw. vorkonditioniert.

Es hat sich gezeigt, dass dieses Gemisch in einem Verhältnis von folgenden Volumeneinheiten, bzw. Verhältnissen bevorzugt zugeführt werden sollte:
Feststoff (Verbundmaterial) 2 - 5 Volumeneinheiten zu 1,2 - 1,5 Volumeneinheiten Flüssigkeit (vorzugsweise Wasser) und zu 5000 - 12000 Volumeneinheiten Gas (vorzugsweise konditionierte Umgebungsluft).

Dieses Gemisch wird dem Reaktor **1,** welcher aus einem drehenden Teil (Rotor 3) und einem festen Teil (Stator **2)** besteht, zugeführt. Es hat sich gezeigt, dass die Anordnung der Achsen (horizontal oder vertikal) nicht von entscheidender Bedeutung für den eigentlichen Aufschlussvorgang des Materials ist. Für eine optimale Zuführung hat es sich jedoch praktisch als sinnvoll erwiesen, das Material-Gas-Flüssigkeitsgemisch einer senkrecht angeordneten Vorrichtung (Reaktor) von oben zuzuführen.

Das zu behandelnde Material (Input), wird einer enormen Partikelbeschleunigung ausgesetzt wobei mechanochemische (d.h. durch Einwirkung des Fluids, bzw. den im Fluid enthaltenen Bestandteilen erzeugte) und tribomechanische (d.h. durch die nachfolgend beschriebene hochfrequenten, wechselseitigen inversen Schübe erzeugte ) Effekte zum Tragen kommen, die in der Folge zum Aufschluss bzw. Ablösung der einzelnen Schichten führen.

Dieser Vorgang der Beschleunigung der Partikel, wiederholt sich mit hoher Frequenz, wobei zwischen den Schichten, entlang der Phasengrenzen ein Schub entsteht, welcher sich wechselwirkend sich in alle Richtungen (Achsen) fortsetzt. (Schub - Schubumkehr - Schub - ...). Durch diese Partikelbeschleunigung und diesen hochfrequenten, wechselseitigen inversen Schübe, entstehen zwischen den Schichtungen Scherkräfte, welche sich in unterschiedlichen Richtungen materialspezifisch fortsetzen. Durch das Fluid (Gas-Flüssigkeitsgemisch) werden diese aufschliessenden Effekte erheblich verstärkt.

Übersteigen die aufschliessenden Schubkräfte die Bindungskräfte des Verbundes, wird dieser in der Folge aufgeschlossen.

Dieser Prozess wird durch die in **Fig. 7** gezeigte erfindungsgemässe Vorrichtung (Reaktor **1)** bewerkstelligt. Die Arbeitsweise dieser Vorrichtung ist wie folgt:
In einem Reaktor **1** befindet sich ein vertikal angeordneter drehender Teil (Rotor) **3,** welcher durch den Antrieb **4** auf eine Umfangsgeschwindigkeit von bis zu 300 m/s hochgefahren werden kann. Das im Injektor-Mischer **5a** vorkonditionierte Gemisch aus Feststoff (Verbundmaterialien) und Fluid, wird zwischen Rotorwerkzeugen **6** und Statorwerkzeugen **7** unterschiedlicher Ausprägung, tribomechanischen und mechanochemischen Bedingungen ausgesetzt, in welchen der Verbundstoff aufschliesst, bzw. delaminiert. Durch die verstellbare gewölbte Scheibe **8** erfolgt eine gezielte Beschleunigung und Ablenkung des Gemenges in den Eingriffsbereich (Ringraum **10)** zwischen den Rotor **3** und den Stator **2.** Nach dem Aufschluss wird das Gemenge dem Reaktor **1** entzogen und dem Materialaustragssystem **9** zugeführt.

Auf dem Weg vom Eintritt in den Reaktor **1** zum Austritt aus dem Reaktor **1** zeigen verschiedene zugeführte Materialien aufgrund ihrer unterschiedlichen physikalischen Eigenschaften, wie Dichte, Elastizität, Duktilität und der Oberflächenbeschaffenheit, eine stark voneinander abweichende Beaufschlagungszeit bzw. Verweilzeit im Reaktor **1.** Schwerere Anteile des Gemenges verbleiben nur kurzzeitig im Ringraum **10,** wohingegen leichtere Anteile des Gemenges eine längere Verweilzeit aufweisen. Wird ein Metallpartikel nach dem Aufschluss freigesetzt, verändert sich seine (durch eine Überlagerung seiner Fallbewegung unter Einfluss der Schwerkraft und einer durch den Rotor **3** aufgeprägten Kreisbewegung resultierende) "Förderspirale" durch den Ringraum **10,** mit der Folge, dass sich die Verweilzeit des Metallpartikels im Ringraum **10** ändert. Diese aufgeschlossenen Metallteile können somit einer weiteren mechanischen Beaufschlagung im Ringraum **10** entzogen und unmittelbar ausgetragen werden. Dies führt zu einer erheblichen Reduktion des Verschleisses und erhöht die Energieeffizienz bzw. den Durchsatz im Reaktor **1.** Zudem kann die Verweilzeit im Reaktor **1** durch die Umfangsgeschwindigkeit des Rotors **3** einerseits und durch die Erhöhung des Fluidanteils und der Zusammensetzung desselben andererseits, beeinflusst werden.

Die Beaufschlagung der Materialien in den Ringraum **10** zwischen Stator **2** und Rotor **3** führt dazu, dass sich Materialien wie Metalle aufgrund ihrer Duktilität deformieren und einkugeln, wohingegen Materialien, welche elastisch sind, wie z.B. wie Kunststoffe oder Kautschuk, sich kaum verändern, da diese die Schübe, Vibrationen und Schockwellen mehrheitlich absorbieren. Mineralische Materialien werden aufgrund ihrer Sprödheit pulverisiert. Das Gemenge liegt nach dem Prozess in unterschiedlicher, materialspezifischer Partikelgrössenverteilung vor.

Spröde Anteile werden zu feinen Partikeln, Metalle zu kugelähnlichen umgeformten Schichtungen und elastische Bestandteile zu Flocken- oder Chipstrukturen.

Die Gesamtspannbreite der Partikelgrössenverteilung beträgt zwischen einigen Mikrometern bis zu der Grösse des zugeführten Inputs, folglich der Zufuhrgrösse von typischerweise 15 mm. Die Materialien sind in dieser Spanne unterschiedlich, in Normalverteilungen angereichert.

Es bietet sich nun an, dieses aufgeschlossene Gemenge einer Klassifizierung oder Sichtung zu unterziehen. Es hat sich jedoch aufgrund der Staubproblematik gezeigt, dass die Materialien vorzugsweise in einem Nassverfahren separiert werden sollten. Des Weiteren bedarf es im Regelfall keiner Trocknung des Gemenges in dem aus dem Reaktor abzuführenden Materialstroms, da die nachstehende Separation ohnehin im nassen Milieu stattfindet. Gleichwohl können optional Trockner dem Reaktorauslass nachgeschaltet werden.

Weitere dem Reaktorausgang optional nachgeschaltete Separatorstationen (insbesondere Wassertrenntische) ermöglichen es, dass in einem Schritt, eine Vielzahl von Einzelfraktionen erzeugt werden. Dabei werden die Dichte und das Auftriebverhalten der Materialien genutzt.

Im Falle aufgeschlossener elektronischer Leiterplatten, werden nachstehende Fraktionen erzielt:
< 50 µm mineralische Bestandteile mit Seltenerdenmetallen
< 200 µm Edelmetalle
100 - 500 µm Kupfer und Kupfermetalle, bzw. andere Schwermetalle
> 1 mm Aluminium bzw. Aluminiumlegierungen
< 300 µm Mineralstoffe Si-Verbindungen
>500 µm Kunststoffe

Aus der Literatur, geht hervor, dass in der WO 2006/117 06 5 A1 eine ähnliche Vorrichtung zum selben Zweck verwendet werden soll, wobei der Aufschluss der Verbundwerkstoffe sich durch den Strömungsabrisses eines Transportfluids, in diesem Falle Umgebungsluft, einstellt, und somit der Verbundwerkstoff zwangsläufig eine Zerkleinerung erfährt. Das Transportfluid (Luft) wird dem aufzuschliessenden Material in Gegenrichtung zugeführt, folglich entgegen dem Materialstrom und der Schwerkraft. Zudem ist diese Luft für den Aufschluss des Materials und der Aufrechterhaltung der Verwirbelungen unbedingt notwendig. Ebenso wird diese Luftströmung zur Abfuhr der entstehenden Wärme verwendet.

Eine Zerkleinerung, wie sie in der WO 2006/117 06 5 A1 beschrieben, wird bei der vorliegenden Erfindung gerade nicht angestrebt. Die aufgeschlossenen Materialien (Schichten) sollen nicht zerkleinert werden.

Die Anwendung von Umgebungsluft, entgegen des Materialstromes und der Schwerkraft, ist dabei nicht notwendig.

Neu und erfinderisch ist, dass der Aufschluss nicht mittels einer Pulverisierung, einer Zerkleinerung, oder einer durch Turbulenzen hervorgerufene Beschleunigung oder dergleichen erfolgt. Der Aufschluss erfolgt, durch mechanochemische und tribomechanische Wirkungen, welche durch die Mischung von Gas mit Wasser (Fluid) und dem Inputmaterial (Verbundwerkstoff) durch die Beaufschlagung der Rotor- und Statorelemente hervorgerufen werden.

Grundsätzlich können bei der erfindungsgemässen Vorrichtung zur Verbesserung des Wirkungsgrads oder Geschwindigkeit beim Aufschliessen des zu bearbeitenden Materialstroms optional auch auf die aufzuschliessenden Materialien einwirkende und mit diesen chemisch reagierende Arbeitsgase und/oder Arbeitsflüssigkeiten zugesetzt werden.

Ein entscheidender Vorteil der vorliegenden Erfindung ist aber gerade, dass die erfindungsgemässe Vorrichtung für eine Vielzahl von aufzuschliessenden Verbundwerkstoffen allein bereits durch rein physikalische Bearbeitungsschritte einen ausreichenden Wirkungsgrad nur unter Zugabe von Wasser und konditionierter Umgebungsluft erzielen kann, so dass auf eine aufwändige und kostenintensive Bereitstellung von Spezialchemikalien (und deren gegebenenfalls daran anschliessende, ebenfalls sehr aufwändige und kostenintensive Entsorgung) grundsätzlich auch komplett verzichtet werden kann.

### Bezugszeichenliste

- 1: Reaktor
- 2: Stator
- 3: Rotor
- 4: Antrieb
- 5: Materialeinlass (Injektor-Mischer 5a, Schütttrichter 5b)
- 6: Rotorwerkzeuge
- 7: Statorwerkzeuge
- 8: gewölbte Scheibe
- 9: Materialauslass
- 10: Ringraum

## Patentansprüche

1. Vorrichtung zum Aufschliessen eines zuzuführenden Materialstroms aus Verbundwerkstoffen und formschlüssigen Strukturen, welche Verbundwerkstoffe enthalten, sowie deren Gemenge, in einzelne Fraktionen der Verbundwerkstoffe, wobei die Vorrichtung umfasst:
einen Rotor **(3)** und einen Stator **(2)** im Inneren eines Reaktors **(1),** die relativ zueinander drehbar sind und die zwischen sich einen Ringraum **(10)** definieren, in dem der zuzuführende Materialstrom durch das Zusammenwirken von am Rotor **(3)** bzw. am Stator **(2)** angebrachten Rotor- bzw. Statorwerkzeugen **(6, 7)** mechanisch aufgeschlossen werden kann,
eine Antriebseinheit **(4)** zum Antreiben des Rotors **(3),**
einen Materialeinlass **(5)** zum Zuführen des zuzuführenden Materialstroms in das Innere des Reaktors **(1),**
einen Materialauslass **(9)** zum Abführen eines zwischen Rotor **(3)** und Stator **(2)** mechanisch aufgeschlossenen und aus dem Innere des Reaktors **(1)** abzuführenden Materialstroms,
**dadurch gekennzeichnet, dass**
der Materialeinlass in Innere des Reaktors **(1)** als Injektor-Mischer **(5a)** ausgebildet ist, in dem der zuzuführende Materialstrom mit einem Fluid beaufschlagbar und vermischbar ist,
eine gewölbte Scheibe **(8)** zwischen dem Injektor-Mischer **(5a)** einerseits und dem Rotor **(3)** und Stator **(2)** andererseits im Inneren des Reaktors **(1)** angebracht ist, um den durch den Injektor-Mischer **(5a)** zuzuführenden Materialstrom gezielt in den Ringbereich **(10)** zwischen Rotor **(3)** und Stator **(2)** gezielt abzulenken.

2. Vorrichtung nach Anspruch 1, wobei der Abstand der gewölbten Scheibe **(8)** zum Injektor-Mischer **(5a)** verstellbar ist.

3. Vorrichtung nach einem der vorstehenden Ansprüche, wobei ein Plattenbrecher dem Injektor-Mischer **(5a)** in den zuzuführenden Materialstrom vorgeschaltet ist, wobei der Plattenbrecher mit zwei oder mit drei Plattenpaaren versehen ist, wobei jedes Plattenpaar jeweils eine starr stehende Platte und eine dazu im Wesentlichen in senkrechter Richtung bewegliche Platte zum Brechen des zwischen den Platten durchzuführenden Materialstroms aufweist.

4. Vorrichtung nach einem der vorstehenden Ansprüche, wobei Aushebemagneten, Induktionsabscheider und/oder Multisensorseparatoren vor den Injektor-Mischer **(5a)** in den zuzuführenden Materialstrom geschaltet sind.

5. Vorrichtung nach einem der vorstehenden Ansprüche, wobei Schredder, Hammermühlen und/oder Granulatoren zum Zerkleinern und homogenen Vermischen von Partikeln vor den Injektor-Mischer **(5a)** in den zuzuführenden Materialstrom geschaltet sind.

6. Vorrichtung nach einem der vorstehenden Ansprüche, wobei ein Zyklon oder ein Venturimischer hinter den Materialauslass **(9)** des Reaktors **(1)** geschaltet ist, um dort den abzuführenden Materialstrom mit einem Strom eines Arbeitsgases zu vermischen, um eine Separation der Partikel in dem abzuführenden Materialstrom in eine oder mehrere Fraktionen herbeizuführen unter Ausnutzung der durch Unterschiede in der Dichte und den Partikelgrössen bedingten unterschiedlichen Beweglichkeiten der Partikel im abzuführenden Materialstrom relativ zu diesem Arbeitsgas.

7. Vorrichtung nach einem der vorstehenden Ansprüche, bei der mindestens ein Flotationsbecken und/oder mindestens ein Hydrozyklon nach dem Materialauslass **(9)** in den abzuführenden Materialstrom geschaltet ist, wobei das mindestens eine Flotationsbecken und/oder der mindestens eine Hydrozyklon dazu ausgelegt sind, Partikel aus dem aus dem Innere des Reaktors **(1)** abzuführenden Materialstrom in Fraktionen abzuscheiden, wobei diese Partikel Dichten aufweisen, die kleiner sind als die vorgegebenen Dichte von zuzumischenden Arbeitsfluiden.

8. Vorrichtung nach einem der vorstehenden Ansprüche, bei der mindestens ein in Vibrationen versetzbarer und mit einer neigbaren Arbeitsfläche versehener Wassertrenntisch nach dem Materialauslass in den abzuführenden Materialstrom geschaltet ist, wobei dieser mindestens eine Wassertrenntisch dazu ausgelegt ist, eine Separation der Partikel in dem abzuführenden Materialstrom unter Ausnutzung der durch Unterschiede in der Dichte und den Partikelgrössen bedingten unterschiedlichen Beweglichkeiten von Partikeln im abzuführenden Materialstrom in eine oder mehrere Fraktionen durchzuführen.

9. Vorrichtung nach einem der vorstehenden Ansprüche, wobei nach dem Materialauslass **(9)** aus dem Reaktor **(1)** ein Trockner in den abzuführenden Materialstrom geschaltet ist.

10. Vorrichtung nach einem der vorstehenden Ansprüche, wobei ein Gebläse in den abzuführenden Materialstrom geschaltet ist, um den Materialstrom dem Reaktor **(1)** pneumatisch zu entziehen.

11. Verfahren zum Aufschliessen eines zugeführten Materialstroms von Verbundwerkstoffen sowie formschlüssigen Strukturen, welche Verbundwerkstoffe beinhalten, sowie deren Gemenge, in einzelne Werkstoffkomponenten, in einer Vorrichtung nach einem der vorstehenden Ansprüche, wobei der zugeführte Materialstrom im Injektor-Mischer **(5a)** der Vorrichtung mit einem Transportfluid (Flüssigkeit - Gasgemisch) vermischt wird.

12. Verfahren nach Anspruch 11, wobei das Aufschliessen des zugeführten Materialstroms unter den nachstehenden Parametern erfolgt: Feststoff aus Verbundwerkstoffen 2 - 5 Volumeneinheiten zu 1,2 - 1,5 Volumeneinheiten Flüssigkeit, vorzugsweise Wasser, und zu 5000 - 12000 Volumeneinheiten Gas, vorzugsweise konditionierte Umgebungsluft.

13. Verfahren nach Anspruch 11, wobei das Gas konditionierte Umgebungsluft ist, der Staub entzogen worden ist und deren Temperatur und Feuchte kontrolliert eingestellt worden ist.

14. Verfahren nach einem der vorstehenden Verfahrensansprüche, wobei die Wärmeabfuhr während des Aufschliessens des zuzuführenden Materialstroms im Inneren des Reaktors **(1)** durch das Transportfluid bewerkstelligt wird.

15. Verfahren nach einem der vorstehenden Verfahrensansprüche,
wobei Partikel in dem aus dem Materialauslass abzuführenden Materialstrom, die eine Dichte aufweisen, die grösser als die Dichte einer in den Materialstrom zuzuführenden Arbeitsflüssigkeit ist, in dieser Arbeitsflüssigkeit zu einer Suspension aufgeschwemmt werden und Wassertrenntischen zugeführt werden, wo Fraktionen der Bruchstücke mittels der Wassertrenntische jeweils als Sediment aus der Suspension ausgefällt werden, und /oder
wobei eine Trennung in Kunststoffe, Aluminium und andere Leichtmetalle, Kupfer, Kupferlegierungen, Edelmetalle und/oder angereicherte Seltene Erdmetalle, erfolgt, und zwar mittels einer Separation basierend auf der Kombination der unterschiedlichen Dichten der Partikel im abzuführenden Materialstrom und der vibratorischen Anregung einer schrägen Ebene eines Wassertrenntisches, welche die unterschiedlichen Beweglichkeiten der einzelnen Partikel im aufzuschliessenden Materialstrom ausnutzt, und/oder
wobei das Gemenge einem Gaszyklon und /oder Filter pneumatisch zugeführt wird, wobei Gas, insbesondere Luft, entzogen wird, und Flüssigkeit, insbesondere Wasser, hinzugefügt, so dass eine Suspension entsteht, wobei die Suspension in einem Flotationsbecken und/oder auf einem Wassertrenntisch und / oder einem Hydrozyklon behandelt wird, um einzelne Fraktionen in der Suspension voneinander zu trennen.

## Claims

1. A device for breaking up a material stream to be supplied of composite materials and interlocking structures containing composite materials, and also mixtures thereof into individual fractions of the composite materials, wherein the device comprises:
a rotor (3) and a stator (2) inside a reactor (1), which are rotatable relative to one another and which define an annular space (10) between them, in which the material stream to be supplied can be mechanically broken up by the interaction of rotor or stator tools (6, 7) attached to the rotor (3) or stator (2),
a drive unit (4) for driving the rotor (3),
a material inlet (5) for feeding the material stream to be supplied into the interior of the reactor (1),
a material outlet (9) for discharging a material stream mechanically broken up between the rotor (3) and stator (2) and to be discharged from the interior of the reactor (1),
**characterised in that**
the material inlet into the interior of the reactor (1) is designed as an injector mixer (5a), in which the material stream to be supplied can be acted upon and mixed with a fluid,
a curved disc (8) is fitted between the injector mixer (5a) on the one hand and the rotor (3) and stator (2) on the other hand inside the reactor (1) in order to deflect the material stream to be fed through the injector mixer (5a) in a targeted manner into the annular region (10) between the rotor (3) and stator (2) .

2. The device according to claim 1, wherein the distance between the curved disc (8) and the injector mixer (5a) is adjustable.

3. The device according to any one of the preceding claims, wherein a plate breaker is connected upstream of the injector-mixer (5a) in the material stream to be supplied, wherein the plate breaker is provided with two or three pairs of plates, wherein each pair of plates comprises a rigidly standing plate and a plate movable substantially perpendicularly thereto for breaking the material stream to be passed between the plates.

4. The device according to any one of the preceding claims, wherein lifting magnets, induction separators and/or multi-sensor separators are connected upstream of the injector-mixer (5a) into the material stream to be supplied.

5. The device according to any one of the preceding claims, wherein shredders, hammer mills and/or granulators for comminuting and homogeneously mixing particles are connected upstream of the injector-mixer (5a) into the material stream to be supplied.

6. The device according to any one of the preceding claims, wherein a cyclone or a Venturi mixer is connected downstream of the material outlet (9) of the reactor (1) in order to mix the material stream to be discharged there with a stream of a working gas in order to bring about a separation of the particles in the material stream to be discharged into one or more fractions, utilising the different mobilities of the particles in the material stream to be discharged relative to this working gas caused by differences in the density and the particle sizes.

7. The device according to any one of the preceding claims, wherein at least one flotation tank and/or at least one hydrocyclone is connected downstream of the material outlet (9) into the material stream to be discharged, wherein the at least one flotation tank and/or the at least one hydrocyclone are designed to separate particles from the material stream to be discharged from the interior of the reactor (1) into fractions, wherein these particles have densities which are smaller than the predetermined density of working fluids to be admixed.

8. The device according to any one of the preceding claims, in which at least one water separation table, which can be set in vibration and is provided with an inclinable working surface, is connected downstream of the material outlet into the material stream to be discharged, wherein this at least one water separation table is designed to carry out a separation of the particles in the material stream to be discharged into one or more fractions, utilising the different mobilities of particles in the material stream to be discharged caused by differences in the density and the particle sizes.

9. The device according to any one of the preceding claims, wherein a dryer is connected into the material stream to be discharged after the material outlet (9) from the reactor (1).

10. The device according to any one of the preceding claims, wherein a blower is connected into the material stream to be discharged in order to pneumatically extract the material stream from the reactor (1).

11. A method for breaking up a supplied material stream of composite materials and interlocking structures containing composite materials, and also mixtures thereof into individual material components in a device according to any one of the preceding claims, wherein the supplied material stream is mixed with a transport fluid (liquid-gas mixture) in the injector mixer (5a) of the device.

12. The method according to claim 11, wherein the breaking up of the supplied material stream takes place under the following parameters: solid material from composite materials 2 - 5 volume units to 1.2 - 1.5 volume units of liquid, preferably water, and to 5000 - 12000 volume units of gas, preferably conditioned ambient air.

13. The method according to claim 11, wherein the gas is conditioned ambient air from which dust has been removed and the temperature and humidity of which have been adjusted in a controlled manner.

14. The method according to any one of the preceding method claims, wherein the heat dissipation is effected by the transport fluid during the breaking up of the material stream to be supplied inside the reactor (1).

15. The method according to any one of the preceding method claims,
wherein particles in the material stream to be discharged from the material outlet, which have a density which is greater than the density of a working liquid to be fed into the material stream, are suspended in this working liquid to form a suspension and are fed to water separation tables, where fractions of the fragments are precipitated out of the suspension as sediment by means of the water separation tables, and/or
wherein a separation into plastics, aluminium and other light metals, copper, copper alloys, precious metals and/or enriched rare earth metals takes place by means of a separation based on the combination of the different densities of the particles in the material stream to be discharged and the vibratory excitation of an inclined plane of a water separation table, which utilises the different mobilities of the individual particles in the material stream to be separated, and/or
wherein the mixture is pneumatically fed to a gas cyclone and/or filter, wherein gas, in particular air, is extracted and liquid, in particular water, is added so that a suspension is formed, wherein the suspension is treated in a flotation tank and/or on a water separation table and/or a hydrocyclone in order to separate individual fractions in the suspension from one another.

## Revendications

1. Dispositif de traitement d'un flux de matériaux à introduire constitué de matériaux composites et de structures assemblées par complémentarité de forme lesquelles contiennent des matériaux composites et de leurs mélanges, visant à obtenir des fractions séparées de matériaux composites, ledit dispositif comprenant :
un rotor (3) et un stator (2) à l'intérieur d'un réacteur (1), lesquels sont montés rotatifs l'un par rapport à l'autre et lesquels définissent un espace annulaire (10) entre eux dans lequel le flux de matériaux à introduire peut subir un traitement mécanique par l'interaction d'outils de rotor et/ou de stator (6, 7) montés sur le rotor (3) et le stator (2), respectivement,
une unité d'entraînement (4) permettant de entraîner le rotor (3),
une entrée de matériaux (5) permettant d'introduire le flux de matériaux à introduire dans l'intérieur du réacteur (1),
une sortie de matériaux (9) destinée à évacuer un flux de matériaux qui a été mécaniquement traité entre le rotor (3) et le stator (2) et qui est à évacuer de l'intérieur du réacteur (1),
**caractérisé en ce que**
ladite entrée de matériaux vers l'intérieur du réacteur (1) est réalisée sous forme d'un injecteur-mélangeur (5a) dans lequel le flux de matériaux à introduire peut recevoir un fluide et y être mélangé,
un disque bombé (8) qui est monté entre, d'une part, l'injecteur-mélangeur (5a) et, d'autre part, le rotor (3) et le stator (2) à l'intérieur du réacteur (1), pour ainsi dévier, de manière ciblée, le flux de matériaux à introduire à travers l'injecteur-mélangeur (5a) de manière à ce qu'il atteigne la zone annulaire (10) entre le rotor (3) et le stator (2).

2. Dispositif selon la revendication 1, la distance entre le disque bombé (8) et l'injecteur-mélangeur (5a) pouvant être réglée.

3. Dispositif selon l'une des revendications précédentes, un concasseur à plaques étant disposé en amont de l'injecteur-mélangeur (5a) dans le flux de matériaux à introduire, ledit concasseur à plaquer étant pourvu de deux ou de trois paires de plaques, chacune des paires de plaques comportant une plaque fixe et une plaque pouvant être déplacée selon une direction qui y est sensiblement verticale, pour ainsi concasser le flux de matériaux à faire passer entre lesdites plaques.

4. Dispositif selon l'une des revendications précédentes, des aimants suspendus, des séparateurs à induction et/ou des séparateurs à capteurs multiples étant disposés en amont de l'injecteur-mélangeur (5a) dans le flux de matériaux à introduire.

5. Dispositif selon l'une des revendications précédentes, des déchiqueteurs, des broyeurs à marteaux et/ou des organes de granulation étant disposés en amont de l'injecteur-mélangeur (5a) dans le flux de matériaux à introduire, pour ainsi broyer les particules et en faire en mélange homogène.

6. Dispositif selon l'une des revendications précédentes, un cyclone ou un mélangeur à effet venturi étant disposé en aval de la sortie de matériaux (9) du réacteur (1) afin d'y mélanger le flux de matériaux à évacuer avec le flux d'un gaz de travail, pour ainsi effectuer une séparation des particules au sein du flux de matériaux à évacuer en une ou plusieurs fractions, en exploitant les mobilités différentes des particules, telles qu'elles résultent des différences en ce qui concerne leur densité et leurs tailles de particule, au sein du flux de matériaux à évacuer, par rapport audit gaz de travail.

7. Dispositif selon l'une des revendications précédentes, au moins un bassin de flottation et/ou au moins un hydrocyclone étant disposé(s) en aval de la sortie de matériaux (9) dans le flux de matériaux à évacuer, l'au moins un bassin de flottation et/ou l'au moins un hydrocyclone étant réalisé(s) de manière à séparer des particules, contenues dans le flux de matériaux à évacuer, de l'intérieur du réacteur (1) sous forme de fractions, lesdites particules ayant des densités inférieures à la densité prédéfinie de fluides de travail qui devront y être mélangés.

8. Dispositif selon l'une des revendications précédentes, au moins une table de séparation à l'eau, susceptible d'être mise en vibration et pourvue d'une surface de travail inclinable, étant disposée en aval de la sortie de matériaux dans le flux de matériaux à évacuer, l'au moins une table de séparation à l'eau étant réalisée de manière à pouvoir effectuer une séparation des particules, contenues dans le flux de matériaux à évacuer, en une ou plusieurs fractions en exploitant les mobilités différentes des particules, telles qu'elles résultent des différences en ce qui concerne leur densité et leurs tailles de particule, au sein du flux de matériaux à évacuer.

9. Dispositif selon l'une des revendications précédentes, un organe de séchage étant disposé, en aval de la sortie de matériaux (9) du réacteur (1), dans le flux de matériaux à évacuer.

10. Dispositif selon l'une des revendications précédentes, une soufflerie étant disposée dans le flux de matériaux à évacuer, afin de retirer le flux de matériaux du réacteur (1) par action pneumatique.

11. Procédé de traitement d'un flux de matériaux entrant comportant des matériaux composites ainsi que des structures assemblées par complémentarité de forme lesquelles contiennent des matériaux composites ainsi que leurs mélanges, visant à obtenir les différents matériaux dont il est composé, mis en œuvre dans un dispositif selon l'une des revendications précédentes, le flux de matériaux entrant étant mélangé, dans l'injecteur-mélangeur (5a) dudit dispositif, avec un fluide vecteur (mélange liquide - gaz).

12. Procédé selon la revendication 11, le traitement du flux de matériaux entrant étant effectué en appliquant les paramètres suivants : matières solides issues de matériaux composites 2 à 5 unités volumiques pour 1,2 à 1,5 unités volumiques de liquide, s'agissant préférentiellement d'eau, et pour 5000 à 12000 unités volumiques de gaz, s'agissant préférentiellement d'air ambiant conditionné.

13. Procédé selon la revendication 11, ledit gaz étant de l'air ambiant qui a été dépoussiéré et dont la température et l'humidité ont été réglées de manière contrôlée.

14. Procédé selon l'une des revendications de procédé précédentes, l'évacuation de la chaleur étant réalisée, pendant le traitement du flux de matériaux à introduire à l'intérieur du réacteur (1), au moyen dudit fluide vecteur.

15. Procédé selon l'une des revendications de procédé précédentes,
les particules au sein du flux de matériaux à évacuer de la sortie de matériaux lesquelles présentent une densité supérieure à la densité d'un liquide de travail à introduire dans le flux de matériaux étant mises en flottation dans ce liquide de travail pour ainsi former une suspension et acheminées vers des tables de séparation à l'eau, où des fractions des morceaux sont précipitées à partir de la suspension sous forme de différents sédiments au moyen desdites tables de séparation à l'eau, et/ou
une séparation en matières plastiques, aluminium et d'autres métaux légers, cuivre, alliages des cuivre, métaux précieux et/ou métaux de terres rares enrichis, étant réalisée au moyen d'une séparation basée sur la combinaison entre les différentes densités des particules dans le flux de matériaux à évacuer et la mise en vibration d'un plan incliné d'une table de séparation à l'eau laquelle exploite les différentes mobilités de chacune des particules faisant partie du flux de matériaux à séparer, et/ou
le mélange étant acheminé par action pneumatique vers un cyclone à gaz et/ou un filtre, en retirant du gaz, notamment de l'air, et en ajoutant du liquide, notamment de l'eau, pour ainsi former une suspension, ladite suspension étant traitée dans un bassin de flottation et/ou sur une table de séparation à l'eau et/ou un hydrocyclone, afin de séparer les différentes fraction contenues dans ladite suspension.
